# EUROPÄISCHE PATENTANMELDUNG

(11) **EP 2 211 254 A1**
(43) Veröffentlichungstag der Anmeldung: **28.07.2010**
(21) Anmeldenummer: 09405009.3
(22) Anmeldetag: 15.01.2009
(51) Int. Cl.: G06F 3/033

(54) **Computermaus, insbesondere eine Lasermaus**

(30) Priorität: 15.01.2009 EP 09405009
(71) Anmelder: La Vecchia, Nunzio, Dr., 6612 Ascona (CH)
(72) Erfinder: La Vecchia, Nunzio, Dr., 6612 Ascona (CH)
(74) Vertreter: Luchs, Willi

(57) **Zusammenfassung**

Bei einer Computermaus, insbesondere eine Lasermaus, ist das Gehäuse (2) als ein verkleinertes Auto-Modell geformt, dessen vordere Haube (5) mehrere Betätigungselemente aufweist. Im Gehäuse (2) ist zusätzlich wenigstens ein Massenspeicher (21) zum Abspeichern von Daten sowie wenigstens eine Schnittstelle, vorzugsweise ein USB-Anschluss (20), zum Verbinden des Massenspeichers (21) mit einem Computer oder ähnlichem integriert. Das Gehäuse (2) des Auto-Modells weist eine vordere Haube (5) auf, die in wenigstens zwei Teile aufgeteilt ist und durch diese zwei Tastflächen (5a, 5b) gebildet sind. Mit dieser Computermaus werden bestehende Automodelle massstabgetreu nachgebildet und damit ergibt sich für einen Benutzer eine sehr spezielle ästhetische Maus und sie kann für die Sicherung von Daten als zusätzliche Funktion benutzt werden.

## Beschreibung

Die Erfindung betrifft eine Computermaus, insbesondere eine Lasermaus gemäss dem Oberbegriff des Anspruches 1.

Computermäuse dieser Art sind allgemein bekannt und auf dem Markt in verschiedensten Ausgestaltungen erhältlich.

Der vorliegenden Erfindung liegt die Aufgabe zugrunde, eine Computermaus zu schaffen, die im Vergleich zu den herkömmlichen Computermäusen eine erweiterte Funktion bietet, und mit welcher auch eine spezielle Form ermöglicht ist.

Diese Aufgabe wird erfindungsgemäss durch eine Computermaus mit den Merkmalen des Anspruches 1 gelöst.

Mit dieser erfindungsgemässen Computermaus werden bestehende Automodelle massstabgetreu nachgebildet und damit ergibt sich für einen Benutzer eine sehr spezielle ästhetische Maus an seinem Arbeitsplatz. Eine solche Computermaus eignet sich ganz besonders auch für Werbezwecke und mit dem integrierten Festspeicher und dem dazugehörigen USB-Anschluss oder dergleichen kann dieselbe für die Sicherung von Daten als zusätzliche Funktion benutzt werden.

Weitere bevorzugte Ausgestaltungen der Erfindung bilden den Gegenstand der abhängigen Ansprüche. So kann bei der Ausbildung von drehenden Rädern eine leichtere Verschiebung der Maus erreicht werden.

Die Erfindung wird nachfolgend anhand der Zeichnung näher erläutert. Es zeigen:
- Fig. 1: in Seitenansicht ein Ausführungsbeispiel einer erfindungsgemässen Computermaus;
- Fig. 2: die Seitenansicht der Computermaus gemäss Fig. 1 während der Anwendung;
- Fig. 3: die Computermaus nach Fig. 1 in Draufsicht; und
- Fig. 4: eine Ansicht von unter dieser Computermaus nach Fig. 1.

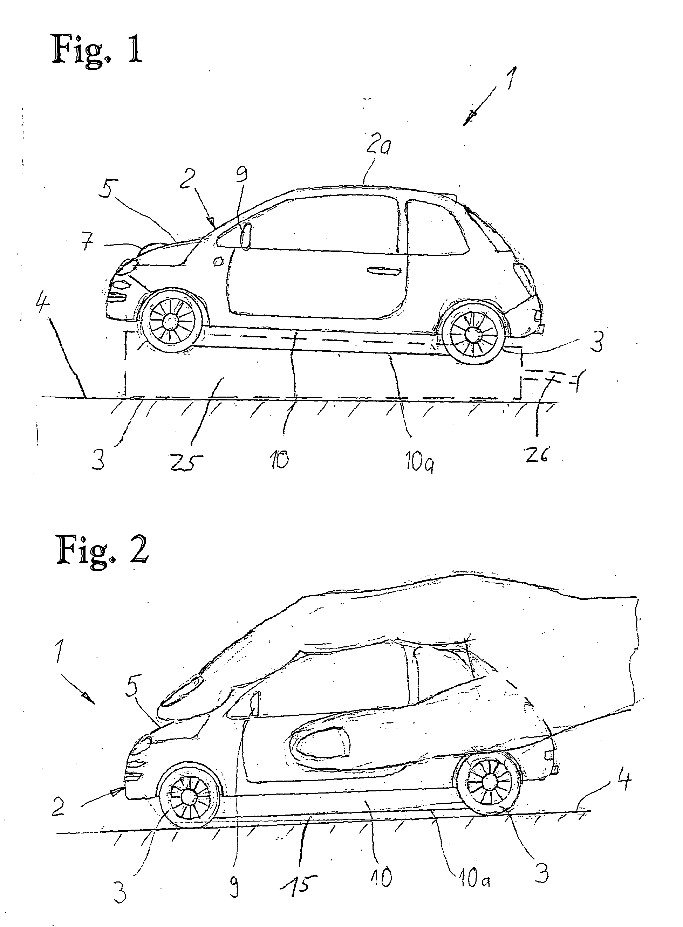

In Fig.1 bis Fig.4 ist eine Computermaus 1 dargestellt, die an sich wie eine übliche Maus funktioniert und dementsprechend bei Nichtgebrauch auf einer mit dem Computer oder ähnlichem vie ein USB-Kabel 26 verbindbaren Ladestation 25 aufsteckbar ist und über eine nicht näher gezeigte Steck- oder Kontaktverbindung ein in diesem integrierten Akkumulator aufladbar ist. An sich bekannt ist die Art und Weise, wie die Computermaus 1 mit dem Computer kommuniziert - entweder über eine Kabelverbindung, oder wie dargestellt kabellos (wireless) über eine Funkverbindung mit der als Empfänger ausgebildeten Ladestation 25. Es handelt sich daher vorzugsweise um eine optische Maus, insbesondere eine Lasermaus, deren Sensorik Laserdioden umfasst. Der Aufbau und die Funktionsweise einer Lasermaus ist an sich ebenso bekannt und wird daher nicht näher beschrieben.

Erfindungsgemäss ist diese Computermaus 1 als ein verkleinertes Modell eines Autos, vorzugsweise einer bestehenden Automarke, geformt, welches aus einem Gehäuse 2 und Rädern 3 besteht, wobei die Räder 3 auf einer Arbeitsfläche 4 aufsetzbar sind. Die Oberseite der Maus dient als Handflächenauflage 2a, wie dies in Fig.2 ersichtlich ist.

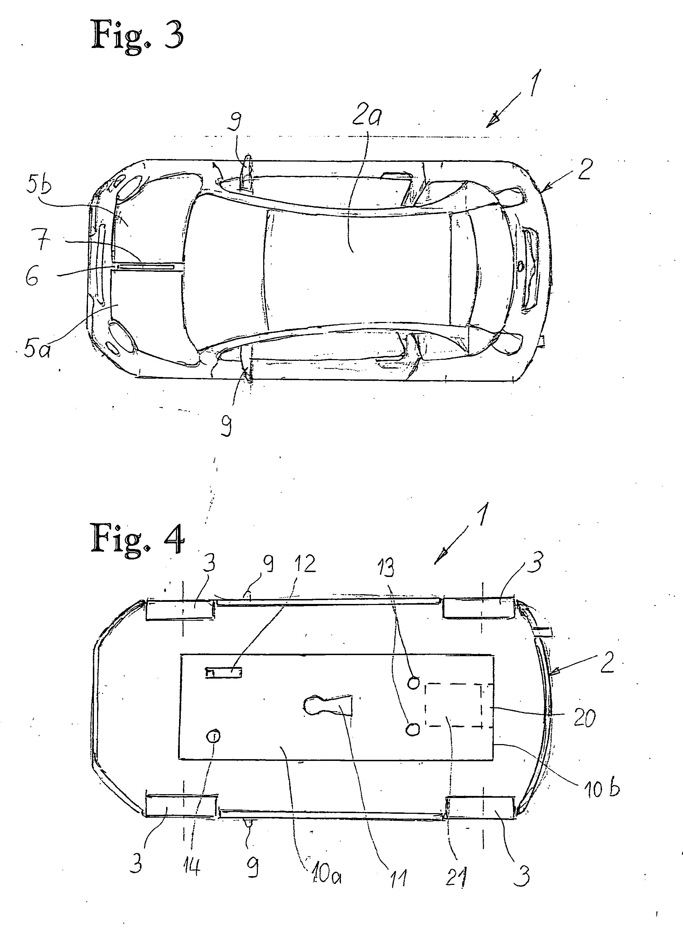

Die vordere Haube 5 des Auto-Modells ist erfindungsgemäss nach Fig. 3 in zwei Teile 5a, 5b aufgeteilt, die zwei bewegliche Tastflächen der Computermaus 1 (die linke und die rechte Taste) bilden, welche jeweils von einer Fingerspitze betätigbar sind. Zwischen den Teilen 5a, 5b ist ein Schlitz 6 vorhanden, aus dem ein Scroll- und/oder Tastenrad 7 nach oben hinausragt. Durch Drehen des Rades 7 können beispielsweise Bildlauffunktionen ausgeführt werden, dasselbe kann aber auch als eine durch Drücken betätigbare Taste ausgebildet sein.

Im Gehäuse 2 der Computermaus 1 ist erfindungsgemäss ein USB-Anschluss 20 (oder eine andere Schnittstelle) mit einem Massenspeicher 21 zum Abspeichern von Daten integriert, so dass die Computermaus 1 neben der klassischen Funktion auch die Funktion eines Memory Sticks übernehmen kann. Der als Schnittstelle dienende USB-Anschluss 20 ist mit Vorteil seitlich am Aussenumfang 10b des Sockels 10 angebracht, vorzugsweise im hinteren Bereich des Auto-Modells, wobei er über ein Kabel an den Computer angeschlossen werden kann.

Die Computermaus 1 kann zusätzlich mit weiteren bedienbaren Betätigungselementen für Zusatzfunktionen ausgestattet sein, welche einzelnen Bauelementen des das Gehäuse 2 bildenden Auto-Modells zugeordnet sein können, zum Beispiel den Aussenspiegeln 9.

Das Gehäuse 2 weist einen unteren Sockel 10 auf, dessen Unterseite 10a mit einem Leuchtloch 11, einem Ein- und Ausschalter 12, Ladeöffnungen 13 sowie einer Verbindungstaste 14 versehen ist (vgl. Fig. 4). Wie aus Fig. 1 und 2 ersichtlich, ist bei einem auf der Arbeitsfläche 4 mit den Rädern 3 stehenden Auto-Modell zwischen der Arbeitsfläche 4 und der Unterseite 10a des Sockels 10 ein Spalt 15 vorhanden.

Die Räder 3 des Auto-Modells können drehbar und zudem beim Bewegen der Computermaus lenkbar ausgebildet sind, wobei der Aussenumfang des Sockels 10 die Ausschwenkung der Räder 3 aus einer geraden Richtung zulässt. Das Lenken der vorderen Räder 3 kann beispielsweise durch ein ähnlich angeordnetes Laufrad wie dasjenige Laufrad 7 für die Mausfunktion erfolgen.

Im Rahmen der Erfindung kann vorgesehen sein, dass beim Einschalten der Maus 1 über einen Ein- und Ausschalter 12 ein Motorgeräusch insbesondere beim Bewegen der Maus hörbar ist, Autolichter einschaltbar sind und/oder eine Autohupe betätigbar ist.

Die Erfindung ist mit dem oben näher erläuterten Ausführungsbeispiel ausreichend dargetan. Sie könnte selbstverständlich noch durch weitere Varianten ausgeführt sein. So könnte anstelle eines Akkumulators auch nur eine auswechselbare Batterie im Gehäuse enthalten sein oder als umweltfreundliche Lösung wäre denkbar, Solarzellen am Gehäuse anzubringen und diese zum Aufladen des Akkumulators vorzusehen.

## Patentansprüche

1. Computermaus, insbesondere eine Lasermaus, mit einem Gehäuse (2), das eine Handflächenauflage (2a) bildet und mit mindestens einem bedienbaren Betätigungselement versehen ist, **dadurch gekennzeichnet, dass**
das Gehäuse (2) als ein verkleinertes Auto-Modell geformt ist, dessen vordere Haube (5) mehrere Betätigungselemente aufweist, wobei im Gehäuse (2) zusätzlich wenigstens ein Massenspeicher (21) zum Abspeichern von Daten sowie wenigstens eine Schnittstelle, vorzugsweise ein USB-Anschluss (20), zum Verbinden des Massenspeichers (21) mit einem Computer oder ähnlichem integriert ist.

2. Computermaus nach Anspruch 1, **dadurch gekennzeichnet, dass** das Gehäuse (2) des Auto-Modells eine vordere Haube (5) aufweist, die in wenigstens zwei Teile aufgeteilt ist und durch diese zwei Tastflächen (5a, 5b) gebildet sind, wobei aus einem zwischen den Teilen vorhandenen Spalt ein Scroll- bzw. Tastenrad (7) nach oben hinausragt.

3. Computermaus nach Anspruch 1 oder 2, **dadurch gekennzeichnet, dass** das Gehäuse (2) mit den Rädern (3) des Auto-Modells auf eine Arbeitsfläche (4) aufsetzbar ist und auf seiner Unterseite einen mit einem Leuchtloch (11) versehenen Sockel (10) aufweist, wobei beim auf die Arbeitsfläche (4) aufgesetzten Gehäuse (2) zwischen der Arbeitsfläche und einer unteren Fläche (10a) des Sockels (10) ein Spalt (15) vorhanden ist.

4. Computermaus nach Anspruch 3, **dadurch gekennzeichnet, dass** die Räder (3) des Auto-Modells drehbar und beim Bewegen der Computermaus lenkbar sind, wobei der Aussenumfang des Sockels (10) die Ausschwenkung der Räder (3) aus einer geraden Richtung zulässt.

5. Computermaus nach Anspruch 3 oder 4, **dadurch gekennzeichnet, dass** der USB-Anschluss (20) als Schnittstelle am seitlichen Aussenumfang des Sockels (10) angeordnet ist.

6. Computermaus nach Anspruch 5, **dadurch gekennzeichnet, dass** der USB-Anschluss (20) im hinteren Bereich des Auto-Modells bzw. seines Sockels (10) angeordnet ist.

7. Computermaus nach einem der Ansprüche 1 bis 6, **dadurch gekennzeichnet, dass** einzelne Bauelemente des Auto-Modells, wie z.B. die Aussenspiegel (9), die bedienbaren Betätigungselemente für Zusatzfunktionen bilden.

8. Computermaus nach einem der Ansprüche 1 bis 7, **dadurch gekennzeichnet, dass** beim Einschalten der Maus (1) über einen Ein- und Ausschalter (12) ein Motorgeräusch hörbar und/oder Autolichter einschaltbar und/oder eine Autohupe betätigbar ist.

9. Computermaus nach einem der Ansprüche 1 bis 8, **dadurch gekennzeichnet, dass** im Gehäuse (2) ein aufladbarer Akkumulator oder eine aufladbare Batterie untergebracht ist und die Maus (1) mit einem Empfänger draht- bzw. kabellos wirkverbunden ist.

10. Computermaus nach Anspruch 9, **dadurch gekennzeichnet, dass** zum Aufladen des Akkumulators bzw. der Batterie das Gehäuse (2) mit dem Sockel (10) in eine an Netzspannung oder an den Computer anschliessbare Ladestation (25) einsteckbar ist.

11. Computermaus nach Anspruch 9, **dadurch gekennzeichnet, dass** das Gehäuse (2) mit Solarzellen zum Aufladen des Akkumulators bzw. der Batterie versehen ist.

12. Computermaus nach einem der Ansprüche 1 bis 11, **dadurch gekennzeichnet, dass** das Auto-Modell eine bestehende Automarke darstellt.
